# EUROPEAN PATENT SPECIFICATION

(11) **EP 2 723 677 B1**
(45) Date of publication and mention of the grant of the patent: **15.07.2015**
(21) Application number: 11731592.9
(22) Date of filing: 27.06.2011
(51) Int. Cl.: B01J 8/06, B01J 8/00, C10G 2/00, C01B 3/38, C01B 3/40, G01N 33/22

(54) **METHOD OF OPERATING A CATALYTIC STEAM-HYDROCARBON REFORMER**
VERFAHREN ZUM BETRIEB EINES KATALYTISCHEN DAMPF-KOHLENWASSERSTOFF-REFORMERS
PROCÉDÉ DE FONCTIONNEMENT D'UN REFORMEUR CATALYTIQUE À LA VAPEUR D'EAU D'HYDROCARBURES

(43) Date of publication of application: 30.04.2014
(73) Proprietor: Air Products and Chemicals, Inc., Allentown, PA 18195 (US)
(72) Inventor: PENG, Xiang-dong, Allentown, PA 18195 (US); LICHT, William, Robert, Allentown, PA 18195 (US); O'LEARY, James, R., Allentown, PA 18195 (US)
(74) Representative: Beck Greener
(86) International application number: PCT/US2011/041962
(87) International publication number: WO 2013/002752

(56) References cited:
- JP-A- 10 120 401
- US-A1- 2002 096 208
- US-A1- 2002 178 806
- US-A1- 2009 078 912
- US-A1- 2010 264 373
- Micro Motion, Emerson process mangement: "Process solution guide - Refining - Hydrogen plant", , 31 December 2008 (2008-12-31), XP002671582, Retrieved from the Internet: URL:http://dfpcorec-p/wf/web/citenpl/citen pl.html?_url=http%3A%2F%2Fwww.documentatio n.emersonprocess.com%2Fgroups%2Fpublic_pub lic_mmisami%2Fdocuments%2Fapplication_guid es%2Fmc-00835.pdf [retrieved on 2012-03-13]

## Description

### BACKGROUND

Hydrogen and/or synthesis gas production by catalytic steam-hydrocarbon reforming, also called steam reforming, steam-methane reforming or SMR, is well-known and is carried out in a reactor called a reformer. The reforming reaction is an endothermic reaction and may be described generally as CₙHₘ + n H₂O → n CO + (m/2 + n) H₂. Hydrogen is generated when synthesis gas is generated. The process, being endothermic, is an energy intensive process. As energy costs rise, the hydrogen production industry desires to improve the thermal efficiency of the reformer.

Steam is one of the reactants in the reforming reaction. In catalytic steam-hydrocarbon reformers, a hydrocarbon-containing feedstock is combined with the steam at a mixing Tee to form a mixed feed. The mixed feed is heated and passed to reformer tubes in a fired tubular reformer to undergo the reforming reaction. The mixed feed may first be passed to a so-called prereformer prior to reaction in the reformer tubes.

The steam provided for the reforming reaction is typically called process steam, distinguished from export steam, which is exported from the reforming plant as a product. The amount of process steam used is a key operating parameter for the catalytic steam-hydrocarbon process. On the one hand, the thermal efficiency of the catalytic steam-hydrocarbon reformer increases as the amount of process steam decreases due to reduced waste heat losses. On the other hand, the propensity for carbon formation on the catalyst in the reformer tubes increases as the amount of process steam decreases below a critical value.

Carbon formation deactivates and/or disintegrates the reforming catalyst, causing undesired pressure drop through the reformer tubes and/or overheating of the tubes. If the catalyst is deactivated and/or disintegrated, hydrogen production must be interrupted in order to regenerate or replace the catalyst. Consequently, the amount of process steam used is generally greater than what is needed for the reforming reaction.

In industrial practice, the amount of process steam used is controlled using a parameter called the "steam-to-carbon molar ratio," also called simply the "steam-to-carbon ratio" and abbreviated "S/C." The steam-to-carbon molar ratio of the feed is the ratio of the molar flow rate of steam in the feed to the molar flow rate of hydrocarbon-based carbon in the feed.

Setting and controlling the steam-to-carbon ratio is important for catalytic steam-hydrocarbon reformer operation. Ideally, operators want to operate with a steam-to-carbon ratio at the lowest suitable value such that the reformer operates at its highest efficiency with no risk of carbon formation. The lowest steam-to-carbon ratio with no risk of carbon formation may be regarded as the critical steam-to-carbon ratio.

Generally, the critical steam-to-carbon ratio is determined during the design phase of the reformer based on the desired process conditions, selected equipment, reforming catalyst, projected feedstock composition, and/or based on past operating experience. The critical steam-to-carbon ratio is typically calculated based upon a worst case scenario, for example, using the catalyst activity at the end of the campaign. To deal with unexpected variations in the process and equipment, a target steam-to-carbon ratio for control purposes is set slightly higher than the critical steam-to-carbon ratio.

In industrial practice, the flow rate and the carbon number of the hydrocarbon-containing stream is measured to determine the molar flow rate of hydrocarbon-based carbon of the hydrocarbon-containing stream. Then the process steam flow rate is adjusted to maintain the target steam-to-carbon ratio.

Industry desires to improve the thermal efficiency of steam/hydrocarbon reformer operation. Industry desires a hydrogen production process using a steam/hydrocarbon reformer that can operate with improved efficiency without the risk of carbon formation on the reforming catalyst.

JP 10-120401 A discloses a method for manufacturing hydrogen by a steam reforming method using off-gas mainly comprising hydrocarbons produced as a byproduct in an oil refinery as a raw material, wherein the flow rate and density of the off-gas are measured, the number of carbon atoms per mole is determined from the correlation between the density of the off-gas and the number of carbon atoms per mole, the total number of carbon atoms in the off-gas is calculated from this number of carbon atoms per mole and the flow rate, the flow rate of the process steam is determined from this total number of carbon atoms and the steam/carbon ratio, and the flow rate of the process steam is controlled.

US 2009/078912 A1 discloses a method for determining a carbon content value (e.g. carbon number value or carbon factor value) of a hydrocarbon-containing mixture. At least one composition-dependent bulk property (e.g. lower heating value, higher heating value, thermal conductivity, viscosity, molar heat capacity, specific heat capacity, and sonic velocity) of the hydrocarbon-containing mixture is measured and optionally at least one non-hydrocarbon component concentration is measured with the resulting measurements used in a carbon content correlation for calculating the carbon content of the hydrocarbon-containing mixture. The carbon content may be used in a hydrogen and/or synthesis gas production process for calculating a target flow rate of steam to be combined with the hydrocarbon-containing mixture to form a mixed feed having a target steam-to-carbon ratio.

In the "Process Solutions Guide - Refining - Hydrogen Plant," from Micro Motion and Emerson Process Management, there is described a Micro Motion Coriolis meter that can be installed on the fuel gas or natural gas feed to control the steam to carbon ratio. The mass of the gas is proportional to the carbon content, so the ratio can be calculated by assuming a constant carbon content per mass of the gas and controlling the steam flow accordingly.

US 2002/0178806 A1 discloses a mass flowmeter system for use in steam reformation of hydrocarbons and includes a Coriolis flowmeter in a hydrocarbon feedstock line. The feedstock carbon content is estimated by close approximation, which facilitates selective control operations governing the relative amounts of steam and hydrocarbon materials as they feed a hydrogen processing unit. The relative amounts of steam and hydrocarbon feedstock are adjusted on the basis of real time measurements.

US 2002/0096208 A1 discloses a method for mass flow and density measurement by combining a vortex and a pressure differential device measurement. A vortex measurement will give the actual volume flow, whereas the pressure differential device measurement has to be corrected for the density to give the actual flow. By comparing the two measurements the density and/or the mass flow is calculated and indicated and the mass flow signal can be used for subsequent control.

US 2002/0096208 A1 discloses that feed to a steam reformer is a mixture of steam and hydrocarbon, and that this mixture must have a fixed molar ratio between steam and carbon. Since the molecular weight of a hydrocarbon is a good measure of the amount of carbon at constant temperature, pressure, and compressibility, the molecular weight is directly related to density. Then the density measurement of a hydrocarbon feed stream to a steam reformer is a useful parameter in determining the correct steam flow.

US 2010/264373 A1 discloses a process for producing a hydrogen-containing product gas by catalytic steam-hydrocarbon reforming with an overall steam-to-carbon molar ratio, (S/C), between 1.5 and 2.4 for the process. Multiple prereformers are used to avoid carbon formation on the catalyst in the catalyst-containing tubes in the primary reformer. In one embodiment, the operating conditions in one or more of the multiple prereformer is varied to adjust a mole fraction ratio of methane, hydrogen, and carbon dioxide for a given steam-to-carbon ratio so that the top-fired reformer operates at low steam-to-carbon ratio without carbon formation.

### BRIEF SUMMARY

There are several aspects of the process as outlined below.

Aspect #1. A method of operating a catalytic steam-hydrocarbon reformer, the reformer having a plurality of reformer tubes containing reforming catalyst for reacting steam and one or more hydrocarbons in the presence of the reforming catalyst in a reforming reaction, wherein the steam is introduced at a steam-to-carbon ratio, the method comprising:
obtaining a value for each of one or more composition-independent properties of one or more process streams, the one or more composition-independent properties selected from properties affecting carbon formation on the reforming catalyst;
determining by at least one of a calculation, a lookup table, a database, and a graph whether to increase or decrease the steam-to-carbon ratio using at least the value of the one or more composition-independent properties and depending on a carbon formation criterion wherein the carbon formation criterion is a criterion in quantitative terms that defines the propensity of the one or more hydrocarbons in the reformer tubes to form carbon on the reforming catalyst in the reformer tubes; and

increasing or decreasing the steam-to-carbon ratio in accordance with the step of determining whether to increase or decrease the steam-to-carbon ratio.

Aspect #2. The method according to aspect #1 wherein the one or more process streams are selected from an inlet stream to the reformer, an outlet stream from the reformer, an inlet stream to a prereformer, and an outlet stream from the prereformer, wherein the outlet stream of the prereformer feeds the reformer.

Aspect #3. The method according to any one of the preceding aspects wherein the one or more composition-independent properties are selected from temperature, pressure, and overall flow rate.

Aspect #4. The method according to any one of the preceding aspects further comprising:
obtaining a value for each of one or more composition-dependent properties of the one or more process streams, the one or more composition-dependent properties selected from properties affecting carbon formation on the reforming catalyst;
wherein the step of determining whether to increase or decrease the steam-to-carbon ratio is further dependent the value of the one or more composition-dependent properties.

Aspect #5. The method according to any one of the preceding aspects further comprising:
obtaining the composition of the one or more process streams;
wherein the step of determining whether to increase or decrease the steam-to-carbon ratio is further dependent on the composition of the one or more process streams.

Aspect #6. The method according to any one of the preceding aspects further comprising:
obtaining a value for the activity of the reforming catalyst;
wherein the step of determining whether to increase or decrease the steam-to-carbon ratio is further dependent on the value of the activity of the reforming catalyst.

Aspect #7. The method according to any one of the preceding aspects wherein the one or more composition-independent properties of the one or more process streams includes a flow rate of a hydrocarbon-containing feed to the reformer for the reforming reaction and wherein the step of determining whether to increase or decrease the steam-to-carbon ratio is dependent on the value of the flow rate of the hydrocarbon-containing feed to the reformer.

Aspect #8. The method according to aspect #7 wherein the one or more composition-independent properties of the one or more process streams further includes a flow rate of another hydrocarbon-containing feed to the reformer, and wherein the step of determining whether to increase or decrease the steam-to-carbon ratio is dependent on the value of the flow rate of the other hydrocarbon-containing feed to the reformer, wherein the other hydrocarbon-containing feed is a recycle stream comprising effluent from the reformer.

Aspect #9. The method according to any one of the preceding aspects wherein the one or more composition-independent properties of the one or more process streams includes a temperature of a hydrocarbon-containing feed to the reformer for the reforming reaction and wherein the step of determining whether to increase or decrease the steam-to-carbon ratio is dependent on the value of the temperature of the hydrocarbon-containing feed to the reformer.

Aspect #10. The method according to any one of the preceding claims wherein the one or more composition-independent properties of the one or more process streams includes a pressure of a hydrocarbon-containing feed to the reformer for the reforming reaction and wherein the step of determining whether to increase or decrease the steam-to-carbon ratio is dependent on the value of the pressure of the hydrocarbon-containing feed to the reformer.

Aspect #11. The method according to any one of the preceding aspects wherein the one or more composition-independent properties of the one or more process streams includes a flow rate of a fuel stream to the reformer for combustion heating and wherein the step of determining whether to increase or decrease the steam-to-carbon ratio is dependent on the value of the flow rate of the fuel stream to the reformer.

Aspect #12. The method according to any one of the preceding aspects wherein the step of determining whether to increase or decrease the steam-to-carbon ratio comprises:
calculating a temperature, T, at one or more longitudinal positions in a reformer tube of the plurality of reformer tubes from at least the obtained value of the one or more composition-independent properties;
calculating a carbon formation temperature, *T_{c}*, at the one or more longitudinal positions in the reformer tube of the plurality of reformer tubes from at least the obtained value of the one or more composition-independent properties;
calculating a temperature difference, *ΔT,* where *ΔT= T_{c} - T at* the one or more longitudinal positions in the reformer tube; and
comparing the temperature difference, *ΔT,* to a target temperature difference as the carbon formation criterion to determine whether to increase or decrease the steam-to-carbon ratio.

Aspect #13. The method according to any one aspects #1 to #11 wherein the step of determining whether to increase or decrease the steam-to-carbon ratio comprises:
measuring a temperature, *T*, at one or more longitudinal positions in a reformer tube of the plurality of reformer tubes;
calculating a carbon formation temperature, *T_{c},* at the one or more longitudinal positions in the reformer tube of the plurality of reformer tubes from at least the obtained value of the one or more composition-independent properties;
calculating a temperature difference, *ΔT,* where *ΔT= T_{c} - T at* the one or more longitudinal positions in the reformer tube; and
comparing the temperature difference, *ΔT,* to a target temperature difference as the carbon formation criterion to determine whether to increase or decrease the steam-to-carbon ratio.

Aspect #14. The method according to any one of aspects #4 to #11 wherein the step of determining whether to increase or decrease the steam-to-carbon ratio comprises:
calculating a temperature, *T*, at one or more longitudinal positions in a reformer tube of the plurality of reformer tubes from at least the obtained value of the one or more composition-independent properties and the obtained value of the one or more composition-dependent properties;
calculating a carbon formation temperature, *T_{c},* at the one or more longitudinal positions in the reformer tube of the plurality of reformer tubes from at least the obtained value of the one or more composition-independent properties and the obtained value of the one or more composition-dependent properties;
calculating a temperature difference, *ΔT,* where *ΔT= T_{c} - T* at the one or more longitudinal positions in the reformer tube; and
comparing the temperature difference, *ΔT,* to a target temperature difference as the carbon formation criterion to determine whether to increase or decrease the steam-to-carbon ratio.

Aspect #15. The method according to any one of aspects #4 to #11 wherein the step of determining whether to increase or decrease the steam-to-carbon ratio comprises:
measuring a temperature, *T*, at one or more longitudinal positions in a reformer tube of the plurality of reformer tubes;
calculating a carbon formation temperature, *T_{c},* at the one or more longitudinal positions in the reformer tube of the plurality of reformer tubes from at least the obtained value of the one or more composition-independent properties and the obtained value of the one or more composition-dependent properties;
calculating a temperature difference, *ΔT,* where *ΔT*= *T_{c} - T* at the one or more longitudinal positions in the reformer tube; and
comparing the temperature difference, *ΔT,* to a target temperature difference as the carbon formation criterion to determine whether to increase or decrease the steam-to-carbon ratio.

Aspect #16. The method according to any one of aspects #5 to #11 wherein the step of determining whether to increase or decrease the steam-to-carbon ratio comprises:
calculating a temperature, *T*, at one or more longitudinal positions in a reformer tube of the plurality of reformer tubes from at least the obtained value of the one or more composition-independent properties and the obtained composition of the one or more process streams;
calculating a carbon formation temperature, *T_{c},* at the one or more longitudinal positions in the reformer tube of the plurality of reformer tubes from at least the obtained value of the one or more composition-independent properties and the obtained composition of the one or more process streams;
calculating a temperature difference, *ΔT,* where *ΔT*= *T_{c} - T at* the one or more longitudinal positions in the reformer tube; and
comparing the temperature difference, *ΔT,* to a target temperature difference as the carbon formation criterion to determine whether to increase or decrease the steam-to-carbon ratio.

Aspect #17. The method according to any one of aspects #5 to #11 wherein the step of determining whether to increase or decrease the steam-to-carbon ratio comprises:
measuring a temperature, *T*, at one or more longitudinal positions in a reformer tube of the plurality of reformer tubes;
calculating a carbon formation temperature, *T_{c},* at the one or more longitudinal positions in the reformer tube of the plurality of reformer tubes from at least the obtained value of the one or more composition-independent properties and the obtained composition of the one or more process streams;
calculating a temperature difference, *ΔT,* where *ΔT*= *T_{c} - T* at the one or more longitudinal positions in the reformer tube; and
comparing the temperature difference, *ΔT,* to a target temperature difference as the carbon formation criterion to determine whether to increase or decrease the steam-to-carbon ratio.

Aspect #18. The method according to any one of aspects #6 to #11 wherein the step of determining whether to increase or decrease the steam-to-carbon ratio comprises:
calculating a temperature, *T*, at one or more longitudinal positions in a reformer tube of the plurality of reformer tubes from at least the obtained value of the one or more composition-independent properties and the obtained value for the activity of the reforming catalyst;
calculating a carbon formation temperature, *T_{c},* at the one or more longitudinal positions in the reformer tube of the plurality of reformer tubes from at least the obtained value of the one or more composition-independent properties and the obtained value for the activity of the reforming catalyst;
calculating a temperature difference, *ΔT,* where *ΔT*= *T_{c} - T at* the one or more longitudinal positions in the reformer tube; and
comparing the temperature difference, *ΔT,* to a target temperature difference as the carbon formation criterion to determine whether to increase or decrease the steam-to-carbon ratio.

Aspect #19. The method according to any one of aspects #6 to #11 wherein the step of determining whether to increase or decrease the steam-to-carbon ratio comprises:
measuring a temperature, *T*, at one or more longitudinal positions in a reformer tube of the plurality of reformer tubes;
calculating a carbon formation temperature, *T_{c},* at the one or more longitudinal positions in the reformer tube of the plurality of reformer tubes from at least the obtained value of the one or more composition-independent properties and the obtained value for the activity of the reforming catalyst;
calculating a temperature difference, *ΔT,* where *ΔT*= *T_{c} - T at* the one or more longitudinal positions in the reformer tube; and
comparing the temperature difference, *ΔT,* to a target temperature difference as the carbon formation criterion to determine whether to increase or decrease the steam-to-carbon ratio.

Aspect #20. The method according to any one of aspects #12 to #19 wherein the step of increasing or decreasing the steam-to-carbon ratio comprises increasing the steam-to-carbon ratio when the temperature difference, *ΔT,* is less than the target temperature difference.

Aspect #21. The method according to any one of aspects #12 to #19 wherein the step of increasing or decreasing the steam-to-carbon ratio comprises decreasing the steam-to-carbon ratio when the temperature difference, *ΔT,* is greater than the target temperature difference.

Aspect #22. The method according to any one of aspects #1 to #11 wherein the step of determining whether to increase or decrease the steam-to-carbon ratio comprises comparing the steam-to-carbon ratio to a reference steam-to-carbon ratio, the reference steam-to-carbon ratio determined from a graph and/or a lookup table created from the carbon formation criterion, the reference steam-to-carbon ratio from the graph and/or the lookup table corresponding to the obtained value for each of the one or more composition-independent properties.

Aspect #23. The method according to any one of aspects #4 to #11 wherein the step of determining whether to increase or decrease the steam-to-carbon ratio comprises comparing the steam-to-carbon ratio to a reference steam-to-carbon ratio, the reference steam-to-carbon ratio determined from a graph and/or a lookup table created from the carbon formation criterion, the reference steam-to-carbon ratio from the graph and/or the lookup table corresponding to the obtained value for each of the one or more composition-independent properties and the obtained value of the one or more composition-dependent properties.

Aspect #24. The method according to any one of aspects #5 to #11 wherein the step of determining whether to increase or decrease the steam-to-carbon ratio comprises comparing the steam-to-carbon ratio to a reference steam-to-carbon ratio, the reference steam-to-carbon ratio determined from a graph and/or a lookup table created from the carbon formation criterion, the reference steam-to-carbon ratio from the graph and/or the lookup table corresponding to the obtained value for each of the one or more composition-independent properties and the obtained composition of the one or more process streams.

Aspect #25. The method according to any one of aspects #6 to #11 wherein the step of determining whether to increase or decrease the steam-to-carbon ratio comprises comparing the steam-to-carbon ratio to a reference steam-to-carbon ratio, the reference steam-to-carbon ratio determined from a graph and/or a lookup table created from the carbon formation criterion, the reference steam-to-carbon ratio from the graph and/or the lookup table corresponding to the obtained value for each of the one or more composition-independent properties and the obtained value for the activity of the reforming catalyst.

### BRIEF DESCRIPTION OF SEVERAL VIEWS OF THE DRAWINGS

FIG. 1 is a process schematic for a steam-hydrocarbon reforming process and apparatus.
FIG. 2 is a process schematic for a steam-hydrocarbon reforming process and apparatus including a steam-hydrocarbon catalytic reformer, and prereformer.
FIG. 3 is a plot of temperature versus percent tube length position for the inner tube wall temperature and the carbon formation temperature.
FIG. 4 is a plot of normalized S/C ratio versus relative hydrogen production.

### DETAILED DESCRIPTION

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used. The adjective "any" means one, some, or all indiscriminately of whatever quantity. The term "and/or" placed between a first entity and a second entity means one of (1) the first entity, (2) the second entity, and (3) the first entity and the second entity. The term "and/or" placed between the last two entities of a list of 3 or more entities means at least one of the entities in the list.

As used herein, "plurality" means two or more.

As used herein, "in fluid flow communication" means operatively connected by one or more conduits, manifolds, valves and the like, for transfer of fluid. A conduit is any pipe, tube, passageway or the like, through which a fluid may be conveyed. An intermediate device, such as a pump, compressor or vessel may be present between a first device in fluid flow communication with a second device unless explicitly stated otherwise.

Downstream and upstream refer to the intended flow direction of the process fluid transferred. If the intended flow direction of the process fluid is from the first device to the second device, the second device is in downstream fluid flow communication of the first device, and the first device is in upstream fluid flow communication of the second device.

The present invention relates to a method of operating a catalytic steam-hydrocarbon reformer. The catalytic steam-hydrocarbon reformer may be used for generating hydrogen and/or synthesis gas. Catalytic steam-hydrocarbon reforming, also called steam methane reforming (SMR), catalytic steam reforming, or steam reforming, is defined as any process used to convert reformer feedstock to synthesis gas by reaction with steam over a catalyst. Synthesis gas, commonly called syngas, is any mixture comprising hydrogen and carbon monoxide. The reforming reaction is an endothermic reaction and may be described generally as CₙHₘ + n H₂O → n CO + (m/2 + n) H₂. Hydrogen is generated when synthesis gas is generated.

Catalytic steam-hydrocarbon reforming takes place in a catalytic steam-hydrocarbon reformer. A catalytic steam-hydrocarbon reformer, also called a steam methane reformer, catalytic steam reformer and/or steam reformer is defined herein as any fired furnace used to convert feedstock containing elemental hydrogen and carbon to synthesis gas by a reaction with steam over a catalyst with heat provided by combustion of a fuel. Feedstock may be one or more of natural gas, methane, naphtha, propane, refinery fuel gas, refinery off-gas, or other suitable reformer feedstock known in the art. Suitable operating temperatures range from 350°C to 650°C at the inlet and 750°C to 950°C at the outlet. Suitable pressures range from 1 to 50 atm. Preferred operating conditions for a catalytic steam-hydrocarbon reformer are known in the art.

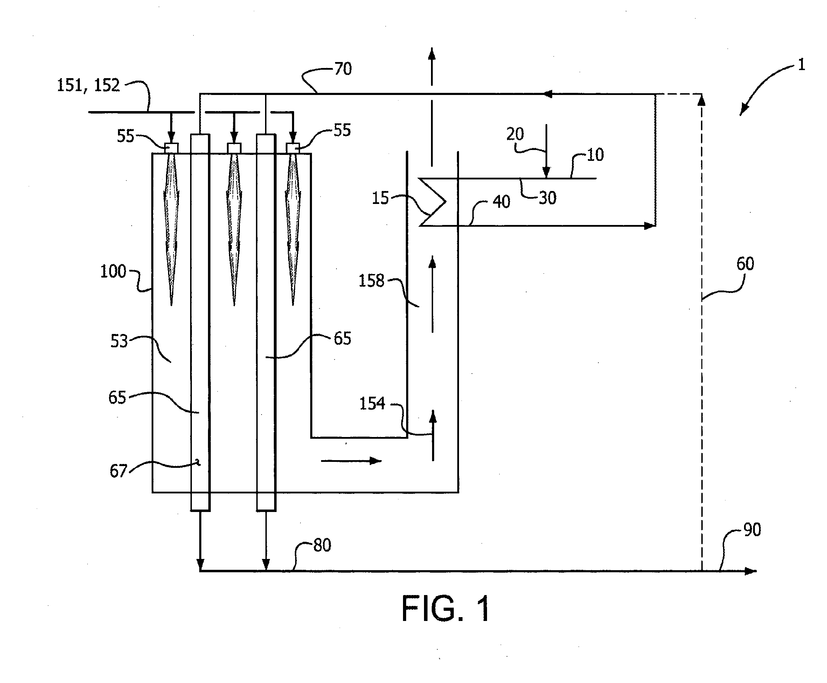

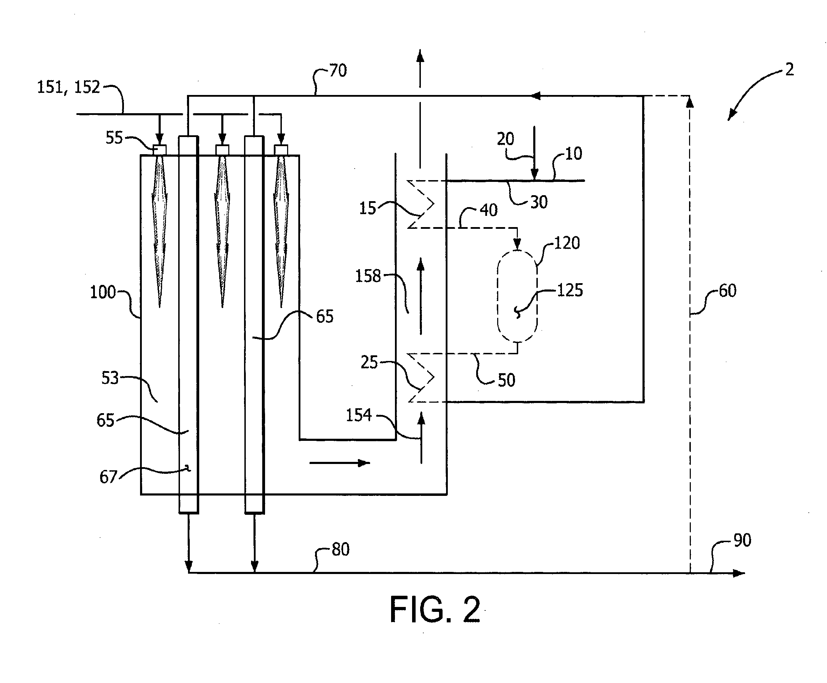

The method is described with reference to the figures. FIG. 1 shows a catalytic steam-hydrocarbon reformer 100 and FIG. 2 shows a catalytic steam-hydrocarbon reformer 100 along with an optional prereformer 120.

Feedstock 10 is mixed with steam 20 to provide mixed feed 30. The mixed feed 30 may be heated by indirect heat exchange with combustion product gases 154 in the convection section 158 of the reformer 100. The heated mixed feed may be introduced into the plurality of reformer tubes 65 as feed 70 as shown in FIG. 1.

Alternatively, as shown in FIG. 2, the mixed feed 30 may be heated by indirect heat exchange with combustion product gases 154 in heat exchanger 15 and passed to optional prereformer 120 containing reforming catalyst 125. Reformate 50 from the prereformer may be heated by indirect heat exchange with combustion product gases 154 in heat exchanger 25 in the convection section 158 of the reformer 100 and introduced into the plurality of reformer tubes 65 as feed 70.

A prereformer is defined herein as any unfired vessel used to convert feedstock containing elemental hydrogen and elemental carbon to synthesis gas by reaction with steam over a catalyst with or without heating. A prereformer may be an adiabatic fixed bed reactor. A prereformer may be a tubular reactor. Suitable catalysts for prereformers are known. A prereformer generally employs a different type of catalyst than a primary reformer, for example a high activity, high nickel content catalyst. Temperatures in a prereformer may be in the range of about 400°C to about 600°C. Heat to a prereformer may be provided from exhaust gases from a primary reformer or other source, but is characterized by the lack of direct heating by a combustion flame. A prereformer and a reformer may be physically connected.

Optionally, as shown in FIG. 1 and FIG. 2, feed 70 may comprise a recycled reformate 60 discharged from the plurality of reformer tubes 65. The recycled reformate may be sourced from any point downstream of the reformer tubes 65, for example, after a shift reactor.

Heat for the reforming reaction is provided by combustion of a fuel 151 with oxygen-containing gas 152, which are introduced into the reformer 100 via burners 55, the combustion taking place in the combustion section 53 of the reformer 100. Oxygen-containing gas 152 may be air, preheated air, oxygen-enriched air, industrial grade oxygen or vitiated air generated for example via direct combustion such as a gas-fired turbine.

Catalytic steam-hydrocarbon reformer 100 has a plurality of reformer tubes 65 containing a reforming catalyst 67 for reacting steam and one or more hydrocarbons in the presence of the reforming catalyst 67 in a reforming reaction. The plurality of reformer tubes 65 traverse the combustion section 53 of the reformer 100. Heat is transferred to the plurality of reformer tubes 65 from the flames and hot combustion gases produced by combustion of the fuel and oxygen-containing gas external to the plurality of reformer tubes, thereby providing heat for the reforming reaction. Reformer furnaces with a plurality of catalyst-containing reformer tubes, i.e. tubular reformers, are well-known in the art. Suitable materials and methods of construction are known. The one or more hydrocarbons may be C1 to C6 hydrocarbons. Catalyst in the catalyst-containing reformer tubes may be any suitable catalyst known in the art, for example, a supported catalyst comprising nickel.

Feed 70 comprising steam and the one or more hydrocarbons is introduced into the plurality of reformer tubes 65 of the reformer 100. Steam for the reforming reaction is introduced into the catalytic steam-hydrocarbon reformer 100 at a steam flow ratio, i.e. a steam-to-carbon molar ratio of the feed 70 introduced into the catalytic steam-hydrocarbon reformer 100.

The steam-to-carbon molar ratio is a conventional term in the field of hydrogen production and syngas production. The steam-to-carbon molar ratio of the feed is the ratio of the molar flow rate of steam in the feed to the molar flow rate of hydrocarbon-based carbon in the feed at the mixing Tee. The molar flow rate of hydrocarbon-based carbon is the molar flow rate of carbon where the carbon is associated with hydrocarbons (i.e. excluding carbon associated with carbon monoxide and carbon dioxide). For example, if the total molar flow rate of the feed is 100 moles/h, and the mole fraction of methane is 0.35, the mole fraction of ethane is 0.1, and the mole fraction of carbon monoxide is 0.05, then the molar flow rate of hydrocarbon-based carbon is 55 moles/h. Methane contributes 35 moles/h of hydrocarbon based carbon. Ethane contributes 20 moles/h of hydrocarbon-based carbon. And carbon monoxide contributes zero moles/h of hydrocarbon based carbon.

Typically, a targeted steam flow ratio is set by the operator of a reformer and the flow rate of steam is adjusted to match the targeted steam flow ratio.

The method comprises obtaining a value for each of one or more composition-independent properties of one or more process streams 10, 30, 70, 80, 151, 152, the one or more composition-independent properties selected from properties affecting carbon formation on the reforming catalyst 67. The properties affecting carbon formation are properties that influence carbon formation.

Composition-independent properties of a process stream are stream properties whose values are independent of the composition of the stream, for example, temperature, pressure, and total flow rate of the stream. Suitable composition-independent properties may be readily selected by a person skilled in the art of steam-hydrocarbon reforming. The relative impact of the various properties affecting carbon formation may be determined from models and/or experiments. The one or more composition-independent properties may be selected from temperature, pressure, and flow rate. The flow rate may be a mass flow rate or a molar flow rate.

The values for the composition-independent properties may be obtained by any suitable measurement technique. For example, temperature may be measured by a thermocouple, pressure may be measured by a pressure transducer, and flow rate may be measured by a flow meter. The value may be obtained by a direct measurement or by an inferred measurement. The composition-independent properties may vary during operation as a result of changes to system variables or to satisfy operational demands, or the composition-independent properties may be held constant for extended periods.

The method comprises determining whether to increase or decrease the steam flow ratio dependent on at least the value of the one or more composition-independent properties and a carbon formation criterion. Whether to increase or decrease the steam flow ratio for steam introduced into the catalytic steam-hydrocarbon reformer is determined using at least the value of the one or more composition-independent properties and depends on a carbon formation criterion. A carbon formation criterion is a criterion in quantitative terms that defines the propensity of the reactant gases in the reformer tubes to form carbon on the reforming catalyst in the reformer tubes. The carbon formation criterion could be a temperature difference between a carbon formation temperature and a tube wall temperature. The carbon formation criterion could be a temperature difference between a carbon formation temperature and the process gas or catalyst temperature.

The carbon formation criterion does not have to be stated in terms of temperature. The carbon formation criterion could be a comparison between the rate of carbon formation and the rate of carbon gasification under the given process conditions (temperature, pressure, composition). For example, a gasification rate that is twice the formation rate at the inside wall temperature of the tube could be a criterion that could provide an operating margin and could be used as the carbon formation criterion.

The carbon formation criterion may be based on theoretical calculations, models, and/or experimental data.

The step of determining whether to increase or decrease the steam flow ratio may be by a calculation, a table look up, or reading from a graph. The step of determining may be done by calculation after obtaining the value of the one or more composition-independent properties and using the value in the calculation.

Alternatively, solutions may be precalculated for a number of values of the one or more composition-independent properties and stored in a database, tables, and/or graphs. After obtaining the value of the one or more composition-independent properties, deciding whether to increase or decrease the steam flow ratio may be determined from the database, tables, and/or graphs.

The method also comprises increasing or decreasing the steam flow ratio in accordance with the step of determining whether to increase or decrease the steam flow ratio. The steam flow ratio may be decreased by decreasing the steam in the feed to a prereformer and/or the reformer. The steam flow ratio may be increased by increasing the steam in the feed to a prereformer and/or the reformer.

The one or more process streams may be selected from an inlet stream to the reformer, an outlet stream from the reformer, an inlet stream to an optional prereformer, and an outlet stream from an optional prereformer. The prereformer, if used, is in upstream fluid flow communication with the reformer such that the outlet stream of the prereformer feeds the plurality of reformer tubes of the reformer.

Values for the composition-independent properties may be obtained from any suitable process stream that affects carbon formation on the reforming catalyst, for example inlet streams to the reformer, inlet streams to a prereformer upstream of the reformer and/or outlet streams from a prereformer upstream of the reformer.

The one or more composition-independent properties of the one or more process streams may include a flow rate of a hydrocarbon-containing feed to the reformer for the reforming reaction and the step of determining whether to increase or decrease the steam flow ratio may then be dependent on the value of the flow rate of the hydrocarbon-containing feed to the reformer.

The hydrocarbon-containing feed to the reformer may be a feedstock stream. The hydrocarbon-containing feed to the reformer may be a recycle stream comprising effluent from the reformer. The hydrocarbon-containing feed to the reformer may be effluent from a prereformer.

Values for the composition-independent properties may be obtained from any suitable process stream that provides an indication of carbon formation on the reforming catalyst, for example inlet streams to the reformer and outlet streams from the reformer.

Referring to FIG.1, the inlet stream to the reformer 100 may be a reactant gas stream 70 introduced into the reformer tubes 65 where the reformer tubes 65 contain reforming catalyst 67. The inlet stream to the reformer may be a fuel stream 151 for providing combustion heating in the reformer. The inlet stream may be an oxidant gas stream 152 for providing oxygen for combustion in the reformer 100.

Referring to FIG. 1, the outlet stream from the reformer may be an effluent stream 80 comprising reformate from the reforming reaction in the reformer tubes 65. Since the hydrogen production rate depends directly on the effluent stream from the reformer, the hydrogen production rate may be a composition-independent property. The outlet stream may be a combustion product gas stream 154 from the combustion in the reformer 100.

The inlet stream to the optional prereformer 120 may be a reactant gas stream 40 feeding the optional prereformer 120.

The outlet stream from the optional prereformer 120 may be an effluent stream 50 comprising reformate from the reforming reaction in the prereformer 120.

As used herein, a reformate stream is any stream comprising hydrogen and carbon monoxide formed from the reforming reaction of a hydrocarbon and steam.

Heat from the combustion product gases is typically used to generate steam in the process. Some of the generated steam is used as a reactant for the reforming reaction and excess steam is exported from the process. Since flows of fuel and combustion oxidant affect export steam production, the flow rate of export steam may also be a composition-independent property for correlating the carbon formation criterion.

The method may further comprise obtaining a value for each of one or more composition-dependent properties of the one or more process streams, the one or more composition-dependent properties selected from properties affecting carbon formation on the reforming catalyst. In this case, the step of determining whether to increase or decrease the steam flow ratio is further dependent on the value of the one or more composition-dependent properties.

A composition-dependent property is defined as any intensive physical property of a fluid mixture that varies depending on the concentration of the various mixture components. An intensive property of a fluid mixture is a physical property of the fluid mixture that does not depend on the amount of the fluid mixture. Lower heating value, higher heating value, thermal conductivity, viscosity, molecular weight, density, molar heat capacity, specific heat capacity, and sonic velocity are examples of composition-dependent properties. Suitable composition-dependent properties may be selected without undue experimentation.

A composition-dependent property value is an expressed value relating to a composition-dependent property for a particular mixture composition. A composition-dependent property value may be in any suitable units and may be directly proportional or inversely proportional to a value of the composition-dependent property using conventional S.I. units. A composition-dependent property value may also be a value in native form depending on the sensor and/or measurement device used to measure the composition-dependent property. For example, value of density measured by a vibrating tube densitometer may be represented in units of Hz.

Alternatively or additionally to obtaining a composition-dependent property, the method may further comprise obtaining the composition of the one or more process streams. When the composition is obtained, the step of determining whether to increase or decrease the steam flow ratio may then be further dependent on the composition of the one or more process streams.

The composition may be measured by a mass spectrometer or any other suitable means.

The method may comprise obtaining a value for the activity of the reforming catalyst in the plurality of reforming tubes. When the activity of the reforming catalyst is obtained, the step of determining whether to increase or decrease the steam flow ratio may then be further dependent on the value of the activity of the reforming catalyst.

The value of the catalyst activity of the reformer catalyst may be a measured value of reformer catalyst in the reformer tubes, an inferred value, or a forecasted value. The measured value may be obtained by laboratory measurements of catalyst samples. Inferred values may be obtained based on modeling and measurements for process variables such as temperature and composition. The forecasted value may be obtained, for example, from operational experience, or from an assumed catalyst aging curve, or similar experimental data. A catalyst aging curve is a forecast of catalyst activity as a function of age usually based on experimental data or operating experience. A catalyst aging curve may be provided by a catalyst manufacturer.

The one or more composition-independent properties of the one or more process streams may further include a flow rate of a second hydrocarbon-containing feed to the reformer. The step of determining whether to increase or decrease the steam flow ratio may then be further dependent on the value of the flow rate of the second hydrocarbon-containing feed to the reformer, wherein the other hydrocarbon-containing feed is a recycle stream comprising effluent from the reformer. Recycling effluent from a reformer back the reformer inlet is known in the art and described for example in U.S. Pat. No. 7,695,708.

The one or more composition-independent properties of the one or more process streams may further include a flow rate of a hydrogen-containing feed to the reformer. The step of determining whether to increase or decrease the steam flow ratio may then be further dependent on the value of the flow rate of the hydrogen-containing feed to the reformer.

In the method, the step of determining whether to increase or decrease the steam flow ratio may comprise calculating a temperature, T, at one or more longitudinal positions in a reformer tube of the plurality of reformer tubes from at least the obtained value of the one or more composition-independent properties. The calculation of the temperature, T, at the one or more longitudinal positions in the reformer tube may additionally depend on the obtained value of the one or more composition-dependent properties if obtained. The calculation of the temperature, T, at the one or more longitudinal positions in the reformer tube may alternatively or additionally depend on the obtained composition of the one or more process streams if obtained. The calculation of the temperature, *T*, at the one or more longitudinal positions in the reformer tube may alternatively or additionally depend on the obtained value for the activity of the reforming catalyst if obtained.

The step of determining whether to increase or decrease the steam flow ratio may also comprise calculating a carbon formation temperature, *T_{c},* at the one or more longitudinal positions in the reformer tube of the plurality of reformer tubes from at least the obtained value of the one or more composition-independent properties. The calculation of the carbon formation temperature, *T_{c},* at the one or more longitudinal positions in the reformer tube may additionally depend on the obtained value of the one or more composition-dependent properties if obtained. The calculation of the carbon formation temperature, *T_{c},* at the one or more longitudinal positions in the reformer tube may alternatively or additionally depend on the obtained composition of the one or more process streams if obtained. The calculation of the carbon formation temperature, *T_{c},* at the one or more longitudinal positions in the reformer tube may alternatively or additionally depend on the obtained value for the activity of the reforming catalyst if obtained.

The step of determining whether to increase or decrease the steam flow ratio may then further comprise calculating a temperature difference, *ΔT,* where *ΔT= T_{c} - T* at the one or more longitudinal positions in the reformer tube and comparing the temperature difference, *ΔT,* to a target temperature difference as the carbon formation criterion to determine whether to increase or decrease the steam flow ratio.

The temperature at one or more longitudinal positions in the reformer tube may be calculated from a reformer model. Reformer models are known in the art, for example, Grotendorst et al., "Computer-aided Modeling and Simulation of the Thermodynamics of Steam Reforming," Mathematics and Computers in Simulation, pp. 1-21, 1738 (1999), and D.A. Latham et al., "Mathematical modeling of an industrial steam-methane reformer for on-line deployment," Fuel Process. Technol. (2011), doi:10.1016/j.fuproc.2011.04.001. Reformer models typically provide the temperature and the composition of the reaction mixture in the reformer tube.

The carbon formation temperature at one or more longitudinal positions in the reformer tube may be calculated from the composition of the reaction mixture in the reformer tube using a carbon formation model. Carbon formation models are known in the art, for example, Faungnawakij et al., "Thermodynamic analysis of carbon formation boundary and reforming performance for steam reforming of dimethyl ether," Journal of Power Sources, Vol. 164, Issue 1, pp. 73-79, (2007), Piña et al., "Optimization of Steam Reformers: Heat Flux Distribution and Carbon Formation," International Journal of Chemical Reactor Engineering, Vol. 1, Article A25, Berkeley Electronic Press (2003). Calculation of the carbon formation temperature is known in the art, for example, J.R. Rostrup-Nielsen, "Catalytic Steam Reforming," Catalysis - Science and Technology, J.R. Andersen and Michael Boudart (ed.), V5, p. 88, Springer-Verlag, (1984).

Alternatively, the step of determining whether to increase or decrease the steam flow ratio may comprise measuring a temperature, *T*, at one or more longitudinal positions on or in a reformer tube of the plurality of reformer tubes. The temperature at one or more longitudinal positions in the reformer tube may be measured by thermocouples placed within the reformer tube. The temperature at one or more longitudinal positions on the reformer tube may be measured by an optical pyrometer.

In this alternative embodiment, the step of determining whether to increase or decrease the steam flow ratio may also comprise calculating a carbon formation temperature, *T_{c},* at the one or more longitudinal positions in the reformer tube of the plurality of reformer tubes from at least the obtained value of the one or more composition-independent properties using methods as described above. The calculation of the carbon formation temperature, *T_{c},* at the one or more longitudinal positions in the reformer tube may additionally depend on the obtained value of the one or more composition-dependent properties if obtained. The calculation of the carbon formation temperature, *T_{c},* at the one or more longitudinal positions in the reformer tube may alternatively or additionally depend on the obtained composition of the one or more process streams if obtained. The calculation of the carbon formation temperature, *T_{c},* at the one or more longitudinal positions in the reformer tube may alternatively or additionally depend on the obtained value for the activity of the reforming catalyst if obtained.

The step of determining whether to increase or decrease the steam flow ratio may then comprise calculating a temperature difference, *ΔT,* where *ΔT*= *T_{c} -* T at the one or more longitudinal positions in the reformer tube and comparing the temperature difference, *ΔT,* to a target temperature difference as the carbon formation criterion to determine whether to increase or decrease the steam flow ratio.

In any of the alternatives, the method may further comprise increasing the steam flow ratio when the temperature difference, *ΔT,* is less than the target temperature difference.

In any of the alternatives, the method may further comprise decreasing the steam flow ratio when the temperature difference, *ΔT,* is greater than the target temperature difference.

### Examples

Each of the examples relate to a top-fired reformer as illustrated in FIG. 1.

The steam flow ratio for each of the examples is the steam-to-carbon molar ratio.

### Example 1

Feed with a normalized hydrocarbon flow rate of 100 is introduced into the reformer tubes with a temperature of 547°C (1016°F) and a normalized steam-to-carbon molar ratio of 1.0. The feed pressure is 3.28 MPa (476 psia). The combustion air temperature is 267°C (513°F). The feed consists of methane and steam. In this example, the composition-independent properties obtained are the normalized flow rate, the inlet temperature and pressure of the feed, and the inlet temperature of the combustion air.

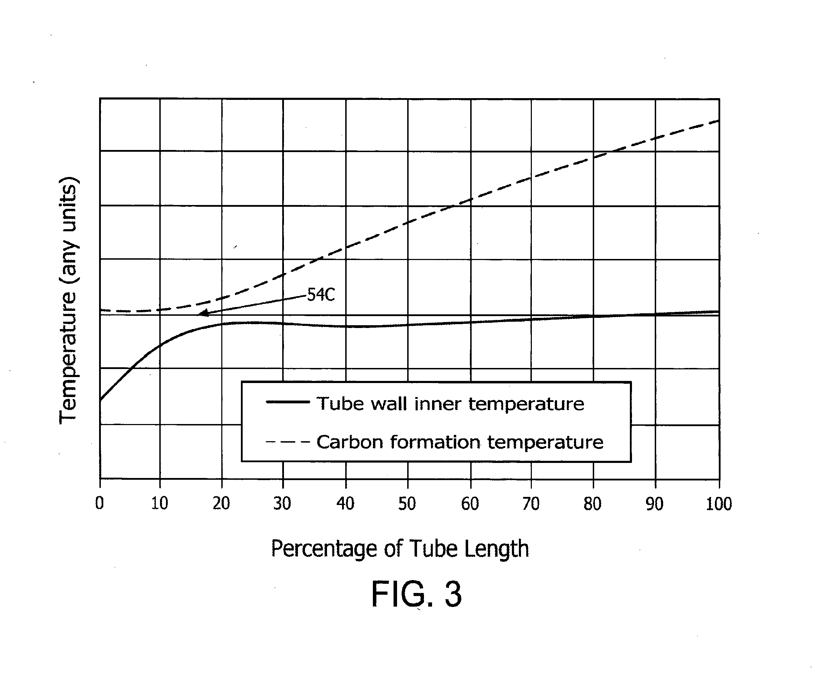

FIG. 3 shows a representative plot of tube wall temperature versus percentage of tube length. The temperature of the inner surface of a reformer tube is calculated using a reformer model and reformer operating conditions comprising the obtained values of the feed rate, feed temperature, feed pressure, and combustion air inlet temperature. The tube wall temperature at the inlet end of the tube is at 0% of the tube length, and the tube wall temperature at the outlet end of the tube is at 100% of the tube length. The same calculation also produces the composition of the reaction mixture along the tube length.

FIG. 3 also shows a representative plot of carbon formation temperature versus percentage of tube length. The carbon formation temperature is calculated using a carbon formation model and composition of the reaction mixture along the tube length calculated from the reformer model.

At 15% of the tube length, the difference between the carbon formation temperature and the tube wall temperature is the smallest and is about 54°C (97°F). This example represents a well-established carbon-free operation. Therefore, this smallest difference between the carbon formation temperature and the tube wall temperature will be used as the target temperature difference for the following examples.

### Example 2 - Turndown condition

Feed with a normalized hydrocarbon flow rate of 76 is introduced into the reformer tubes with a temperature of 536°C (997°F) and a normalized steam-to-carbon molar ratio of 1.0. The reformer feed inlet pressure is 3.13 MPa (454 psia) and the combustion air inlet temperature is 234°C (453°F). The feed consists of methane and steam. In this example, changes in the feed flow, feed temperature, feed pressure and combustion air inlet temperature as compared to those in Example 1 are due to a reduced production rate (i.e. turndown).

At turndown conditions, the reformer tube wall temperatures are typically lower than at full capacity due to lower heat fluxes resulting from a reduced firing rate of the burners. The reduced flow rates also mean a decrease in the space velocity over the catalyst. This means that a greater fraction of the feed gas undergoes the reforming reaction over the initial portion of the tube. This compositional change results in higher carbon formation temperatures. The temperature of the inner surface of a reformer tube and the composition of the reaction mixture are calculated using a reformer model and reformer operating conditions comprising the obtained values of the feed flow rate, feed temperature, feed pressure, and combustion air inlet temperature.

The carbon formation temperature is calculated using a carbon formation model.

The smallest difference between the carbon formation temperature and the tube wall temperature is calculated in Example 2 to be 61 °C (110°F). This smallest difference between the carbon formation temperature and the tube wall temperature is greater than the target temperature difference (established as 54°C in Example 1) and the steam-to-carbon ratio can be decreased.

Decreasing the steam-to-carbon ratio can improve the energy efficiency of the reforming process.

### Example 3 - Syngas recycle

In this example, a fresh reformer feed stream (stream 40) with a normalized steam-to-carbon molar ratio of 1.0 and a normalized hydrocarbon flow rate of 76 is combined with a syngas recycle stream (stream 60) with a normalized hydrocarbon flow rate of 19. The reformer feed is introduced into the reformer tubes with a temperature of 522°C (972°F) and a pressure of 3.2 MPa (464 psia). The combustion air inlet temperature is 239°C (463°F). The changes in the feed flow rate, feed temperature, feed pressure and combustion air inlet temperature as compared to Example 2 are due to the recycle stream.

The temperature of the inner surface of a reformer tube and the composition of the reaction mixture are calculated using a reformer model and reformer operating conditions comprising the obtained values of the feed flow rate, feed temperature, feed pressure, combustion air inlet temperature and flow rate, and the flow rate and composition of the recycle stream.

The carbon formation temperature is calculated using a carbon formation model.

The smallest difference between the carbon formation temperature and the tube wall temperature is calculated in Example 3 to be 93°C (168°F). The smallest difference between the carbon formation temperature and the tube wall temperature is greater than the target temperature difference (established as 54°C in Example 1).

Since the target temperature difference is less than the calculated smallest temperature difference, the steam-to-carbon ratio can be decreased.

Decreasing the steam-to-carbon ratio can improve the energy efficiency of the reforming process.

### Example 4 - Syngas recycle with reduced steam flow ratio

In this example, a fresh reformer feed stream (stream 40) with a normalized steam-to-carbon molar ratio of 0.87 and a normalized hydrocarbon flow of 76 is combined with a syngas recycle stream (stream 60) with a normalized hydrocarbon flow rate of 19. The reformer feed is introduced into the reformer tubes with a temperature of 524°C (975°F) and a pressure of 3.2 MPa (460 psia). The combustion air inlet temperature is 238°C (461°F). In this example, the changes in the feed flow rate, feed temperature, feed pressure, and combustion air inlet temperature as compared to Example 3 are due to the recycle stream and reduced steam-to-carbon molar ratio associated with the fresh feed.

The temperature of the inner surface of a reformer tube and the composition of the reaction mixture are calculated using a reformer model and reformer operating conditions comprising the obtained values of the feed flow rate, feed temperature, feed pressure combustion air temperature, and the flow rate and composition of the recycle stream.

The carbon formation temperature is calculated using a carbon formation model.

The smallest difference between the carbon formation temperature and the tube wall temperature is calculated in example 4 to be 85°C (154°F). The smallest difference between the carbon formation temperature and the tube wall temperature is greater than the target temperature difference (established as 54°C in Example 1). Since the target temperature difference is less than the calculated smallest temperature difference, the steam-to-carbon ratio can be decreased.

Decreasing the steam-to-carbon ratio can improve the energy efficiency of the reforming process.

### Example 5 - Feedstock composition

The reformer operating conditions of Example 5 are the same as those in Example 1 with the only exception that the reformer feed contains 2 mole% ethane. The presence of ethane may be due to the change in the plant feedstock composition or aging of the prereformer (if present). The normalized steam-to-carbon molar ratio is 1.0 where the carbon flow is computed, as described earlier, by accounting for the number of carbon atoms in the hydrocarbon molecules.

The temperature of the inner surface of a reformer tube and the composition of the reaction mixture are calculated using a reformer model and reformer operating conditions comprising the obtained values of the feed flow rate, feed temperature, feed pressure, feed composition and combustion air inlet temperature.

The carbon formation temperature is calculated using a carbon formation model.

The smallest difference between the carbon formation temperature and the tube wall temperature is calculated in example 5 to be 39°C (70°F). The decrease in the difference is due to the greater carbon formation propensity of ethane than that of methane although the same steam-to-carbon molar ratio is used in Example 1 and Example 5. The smallest difference between the carbon formation temperature and the tube wall temperature is smaller than the target temperature difference in Example 1.

Since the target temperature difference is greater than the calculated smallest temperature difference, the steam-to-carbon ratio should be increased.

Increasing the steam-to-carbon ratio can help avoid carbon formation on the reforming catalyst.

### Example 6 - Catalyst activity

The reformer operating conditions in Example 6 are the same as those in Example 1 with the only exception that the catalyst activity is obtained and is 25% greater than the catalyst activity in Example 1.

The temperature of the inner surface of a reformer tube and the composition of the reaction mixture are calculated using a reformer model and reformer operating conditions comprising the obtained values of the feed flow rate, feed temperature, feed pressure, combustion air inlet temperature, and the catalyst activity.

The carbon formation temperature is calculated using a carbon formation model.

The smallest difference between the carbon formation temperature and the tube wall temperature is calculated in example 6 to be 65°C (117°F). The smallest difference between the carbon formation temperature and the tube wall temperature is greater than the target temperature difference (established as 54°C in Example 1).

Since the target temperature difference is smaller than the calculated smallest temperature difference, the steam-to-carbon ratio can be decreased.

Decreasing the steam-to-carbon ratio can improve the energy efficiency of the reforming process.

### Example 7 - Use of a plot to determine whether to increase or decrease S/C

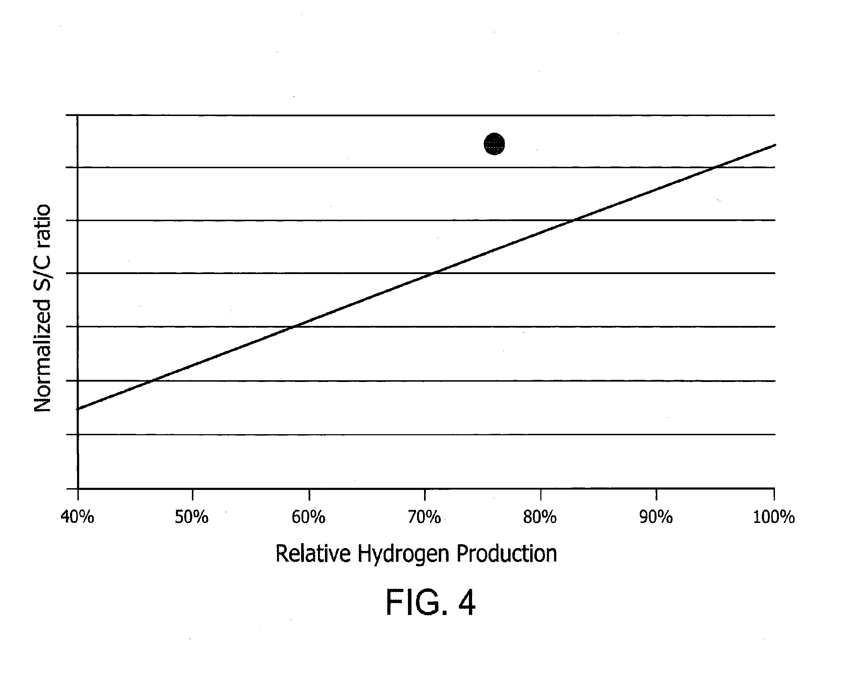

The hydrogen production rate is a composition independent parameter that affects carbon formation. A reformer model and carbon formation model can be used along with design operating conditions to generate a plot like Figure 4 which shows a relationship between hydrogen production and the normalized steam-to-carbon ratio which satisfies a safe operating margin to carbon formation. The curve has a positive slope for the reasons given in Example 2.

In this example, the hydrogen production rate is 76% and the normalized S/C ratio is 1.0.

The hydrogen production rate is obtained. The operating point is shown on Figure 4 and is seen to lie above the curve which means that steam-to-carbon ratio can be decreased.

Decreasing the steam-to-carbon ratio can improve the energy efficiency of the reforming process.

Although the present invention has been described as to specific embodiments or examples, it is not limited thereto, but may be changed or modified into any of various other forms without departing from the scope of the invention as defined in the accompanying claims.

## Claims

1. A method of operating a catalytic steam-hydrocarbon reformer, the reformer having a plurality of reformer tubes containing reforming catalyst for reacting steam and one or more hydrocarbons in the presence of the reforming catalyst in a reforming reaction, wherein the steam is introduced at a steam-to-carbon molar ratio, the method comprising:
obtaining a value for each of one or more composition-independent properties of one or more process streams, the one or more composition-independent properties selected from properties affecting carbon formation on the reforming catalyst;
determining by at least one of a calculation, a lookup table, a database, and a graph whether to increase or decrease the steam-to-carbon molar ratio using at least the value of the one or more composition-independent properties and depending on a carbon formation criterion wherein the carbon formation criterion is a criterion in quantitative terms that defines the propensity of the one or more hydrocarbons in the reformer tubes to form carbon on the reforming catalyst in the reformer tubes; and
increasing or decreasing the steam-to-carbon molar ratio in accordance with the step of determining whether to increase or decrease the steam-to-carbon molar ratio.

2. The method of claim 1 wherein the one or more process streams are selected from an inlet stream to the reformer, an outlet stream from the reformer, an inlet stream to a prereformer, and an outlet stream from the prereformer, wherein the outlet stream of the prereformer feeds the reformer, and wherein the one or more composition-independent properties are selected from temperature, pressure, and overall flow rate.

3. The method of any one of the preceding claims further comprising:
obtaining a value for each of one or more composition-dependent properties of the one or more process streams, the one or more composition-dependent properties selected from properties affecting carbon formation on the reforming catalyst;
wherein the step of determining whether to increase or decrease the steam-to-carbon molar ratio is further dependent on the value of the one or more composition-dependent properties.

4. The method of any one of the preceding claims further comprising:
obtaining the composition of the one or more process streams;
wherein the step of determining whether to increase or decrease the steam-to-carbon molar ratio is further dependent on the composition of the one or more process streams.

5. The method of any one of the preceding claims further comprising:
obtaining a value for the activity of the reforming catalyst;
wherein the step of determining whether to increase or decrease the steam-to-carbon molar ratio is further dependent on the value of the activity of the reforming catalyst.

6. The method of any one of the preceding claims wherein the one or more composition-independent properties of the one or more process streams includes a flow rate of a hydrocarbon-containing feed to the reformer for the reforming reaction and wherein the step of determining whether to increase or decrease the steam-to-carbon molar ratio is dependent on the value of the flow rate of the hydrocarbon-containing feed to the reformer.

7. The method of claim 6 wherein the one or more composition-independent properties of the one or more process streams further includes a flow rate of another hydrocarbon-containing feed to the reformer, and wherein the step of determining whether to increase or decrease the steam-to-carbon molar ratio is dependent on the value of the flow rate of the other hydrocarbon-containing feed to the reformer, wherein the other hydrocarbon-containing feed is a recycle stream comprising effluent from the reformer.

8. The method of any one of the preceding claims wherein:
the one or more composition-independent properties of the one or more process streams includes a temperature of a hydrocarbon-containing feed to the reformer for the reforming reaction and wherein the step of determining whether to increase or decrease the steam-to-carbon molar ratio is dependent on the value of the temperature of the hydrocarbon-containing feed to the reformer; and/or
the one or more composition-independent properties of the one or more process streams includes a pressure of a hydrocarbon-containing feed to the reformer for the reforming reaction and wherein the step of determining whether to increase or decrease the steam-to-carbon molar ratio is dependent on the value of the pressure of the hydrocarbon-containing feed to the reformer.

9. The method of any one of the preceding claims wherein the one or more composition-independent properties of the one or more process streams includes a flow rate of a fuel stream to the reformer for combustion heating and wherein the step of determining whether to increase or decrease the steam-to-carbon molar ratio is dependent on the value of the flow rate of the fuel stream to the reformer.

10. The method of any one of the preceding claims wherein the step of determining whether to increase or decrease the steam-to-carbon molar ratio comprises:
measuring a temperature, T, at one or more longitudinal positions in a reformer tube of the plurality of reformer tubes or calculating a temperature, T, at one or more longitudinal positions in a reformer tube of the plurality of reformer tubes from at least the obtained value of the one or more composition-independent properties;
calculating a carbon formation temperature, *T_{c},* at the one or more longitudinal positions in the reformer tube of the plurality of reformer tubes from at least the obtained value of the one or more composition-independent properties;
calculating a temperature difference, *ΔT,* where *ΔT*= *T_{c} - T* at the one or more longitudinal positions in the reformer tube; and
comparing the temperature difference, *ΔT,* to a target temperature difference as the carbon formation criterion to determine whether to increase or decrease the steam-to-carbon molar ratio.

11. The method of any one of claims 3 to 9 wherein the step of determining whether to increase or decrease the steam-to-carbon molar ratio comprises:
measuring a temperature, *T*, at one or more longitudinal positions in a reformer tube of the plurality of reformer tubes or calculating a temperature, *T*, at one or more longitudinal positions in a reformer tube of the plurality of reformer tubes from at least the obtained value of the one or more composition-independent properties and the obtained value of the one or more composition-dependent properties;
calculating a carbon formation temperature, *T_{c},* at the one or more longitudinal positions in the reformer tube of the plurality of reformer tubes from at least the obtained value of the one or more composition-independent properties and the obtained value of the one or more composition-dependent properties;
calculating a temperature difference, *ΔT,* where *ΔT* = *T_{c} - T* at the one or more longitudinal positions in the reformer tube; and
comparing the temperature difference, *ΔT,* to a target temperature difference as the carbon formation criterion to determine whether to increase or decrease the steam-to-carbon molar ratio.

12. The method of any one of claims 4 to 9 wherein the step of determining whether to increase or decrease the steam-to-carbon molar ratio comprises:
measuring a temperature, *T*, at one or more longitudinal positions in a reformer tube of the plurality of reformer tubes or calculating a temperature, *T*, at one or more longitudinal positions in a reformer tube of the plurality of reformer tubes from at least the obtained value of the one or more composition-independent properties and the obtained composition of the one or more process streams;
calculating a carbon formation temperature, *T_{c},* at the one or more longitudinal positions in the reformer tube of the plurality of reformer tubes from at least the obtained value of the one or more composition-independent properties and the obtained composition of the one or more process streams;
calculating a temperature difference, *ΔT,* where *ΔT* = *T_{c} - T* at the one or more longitudinal positions in the reformer tube; and
comparing the temperature difference, *ΔT,* to a target temperature difference as the carbon formation criterion to determine whether to increase or decrease the steam-to-carbon molar ratio.

13. The method of any one of claims 5 to 9 wherein the step of determining whether to increase or decrease the steam-to-carbon molar ratio comprises:
measuring a temperature, *T*, at one or more longitudinal positions in a reformer tube of the plurality of reformer tubes or calculating a temperature, *T*, at one or more longitudinal positions in a reformer tube of the plurality of reformer tubes from at least the obtained value of the one or more composition-independent properties and the obtained value for the activity of the reforming catalyst;
calculating a carbon formation temperature, *T_{c},* at the one or more longitudinal positions in the reformer tube of the plurality of reformer tubes from at least the obtained value of the one or more composition-independent properties and the obtained value for the activity of the reforming catalyst;
calculating a temperature difference, *ΔT,* where *ΔT*= *T_{c} - T* at the one or more longitudinal positions in the reformer tube; and
comparing the temperature difference, *ΔT,* to a target temperature difference as the carbon formation criterion to determine whether to increase or decrease the steam-to-carbon molar ratio.

14. The method of any one of claims 1 to 9 wherein the step of determining whether to increase or decrease the steam-to-carbon molar ration comprises comparing the steam-to-carbon molar ratio to a reference steam-to-carbon molar ratio, the reference steam-to-carbon molar ratio determined from a graph and/or a lookup table created from the carbon formation criterion, the reference steam-to-carbon molar ratio from the graph and/or the lookup table corresponding to the obtained value for each of the one or more composition-independent properties.

15. The method of any one of claims 3 to 9 wherein the step of determining whether to increase or decrease the steam-to-carbon molar ratio comprises comparing the steam-to-carbon molar ratio to a reference steam-to-carbon molar ratio the reference steam-to-carbon molar ratio determined from a graph and/or a lookup table created from the carbon formation criterion, the reference steam-to-carbon molar ratio from the graph and/or the lookup table corresponding to the obtained value for each of the one or more composition-independent properties and the obtained value of the one or more composition-dependent properties.

16. The method of any one of claims 4 to 9 wherein the step of determining whether to increase or decrease the steam-to-carbon molar ratio comprises comparing the steam-to-carbon molar ratio to a reference steam-to-carbon molar ratio, the reference steam-to-carbon molar ratio determined from a graph and/or a lookup table created from the carbon formation criterion, the reference steam-to-carbon molar ratio from the graph and/or the lookup table corresponding to the obtained value for each of the one or more composition-independent properties and the obtained composition of the one or more process streams.

17. The method of any one of claims 5 to 9 wherein the step of determining whether to increase or decrease the steam-to-carbon molar ratio comprises comparing the steam-to-carbon molar ratio to a reference steam-to-carbon molar ratio, the reference steam-to-carbon molar ratio determined from a graph and/or a lookup table created from the carbon formation criterion, the reference steam-to-carbon molar ratio from the graph and/or the lookup table corresponding to the obtained value for each of the one or more composition-independent properties and the obtained value for the activity of the reforming catalyst.

## Patentansprüche

1. Verfahren zum Betreiben eines katalytischen Dampf-Kohlenwasserstoff-Reformers, wobei der Reformer eine Vielzahl von Reformerrohren hat, die Reformierungskatalysator enthalten, um in einer Reformierungsreaktion Dampf und ein oder mehrere Kohlenwasserstoffe in der Anwesenheit des Reformierungskatalysators zu reagieren, wobei der Dampf mit einem molaren Dampf-zu-Kohlenstoff-Verhältnis eingeführt wird, wobei der Verfahren umfasst:
Erhalten von einem Wert für jede von einer oder mehreren zusammensetzungs-unabhängigen Eigenschaften von einem oder mehreren Verfahrensströmen, wobei die ein oder mehreren zusammensetzungs-unabhängigen Eigenschaften aus Eigenschaften ausgewählt sind, die die Kohlenstoffbildung auf dem Reformierungskatalysator beeinflussen;
Bestimmen mittels von mindestens einem ausgewählt aus einer Berechnung, einer Nachschlagetabelle, einer Datenbank und einem Graph, ob das molare Dampf-zu-Kohlenstoff-Verhältnis zu erhöhen oder zu verringern ist, wobei mindestens der Wert für die ein oder mehreren zusammensetzungs-unabhängigen Eigenschaften verwendet wird und wobei dies in Abhängigkeit von einem Kohlenstoffbildungskriterium geschieht, wobei das Kohlenstoffbildungskriterium ein quantitatives Kriterium ist, dass die Neigung von den ein oder mehreren Kohlenwasserstoffen in den Reformerrohren definiert, Kohlenstoff auf dem Reformierungskatalysator in den Reformerrohren zu bilden; und
Erhöhen oder Verringern von dem molaren Dampf-zu-Kohlenstoff-Verhältnis in Übereinstimmung mit dem Schritt des Bestimmens, ob das molare Dampf-zu-Kohlenstoff-Verhältnis zu erhöhen oder zu verringern ist.

2. Verfahren nach Anspruch 1, wobei die ein oder mehreren Verfahrensströme aus einem Einlassstrom zu dem Reformer, einem Auslassstrom aus dem Reformer, einem Einlassstrom zu einem Präreformer und einem Auslassstrom aus dem Präreformer ausgewählt sind, wobei der Auslassstrom aus dem Präreformer den Reformer speist und wobei die ein oder mehreren zusammensetzungs-unabhängigen Eigenschaften aus Temperatur, Druck und Gesamtdurchflussmenge ausgewählt sind.

3. Verfahren nach einem der vorhergehenden Ansprüche, ferner umfassend:
Erhalten von einem Wert für jede von einer oder mehreren zusammensetzungs-abhängigen Eigenschaften von den ein oder mehreren Verfahrensströmen, wobei die ein oder mehreren zusammensetzungs-abhängigen Eigenschaften aus Eigenschaften ausgewählt sind, die die Kohlenstoffbildung auf dem Reformierungskatalysator beeinflussen;
wobei der Schritt des Bestimmens, ob das molare Dampf-zu-Kohlenstoff-Verhältnis zu erhöhen oder zu verringern ist, ferner von dem Wert für die ein oder mehreren zusammensetzungs-abhängigen Eigenschaften abhängt.

4. Verfahren nach einem der vorhergehenden Ansprüche, ferner umfassend:
Erhalten der Zusammensetzung von den ein oder mehreren Verfahrensströmen;
wobei der Schritt des Bestimmens, ob das molare Dampf-zu-Kohlenstoff-Verhältnis zu erhöhen oder zu verringern ist, ferner von der Zusammensetzung von den ein oder mehreren Verfahrensströmen abhängt.

5. Verfahren nach einem der vorhergehenden Ansprüche, ferner umfassend:
Erhalten von einem Wert für die Aktivität des Reformierungskatalysators;
wobei der Schritt des Bestimmens, ob das molare Dampf-zu-Kohlenstoff-Verhältnis zu erhöhen oder zu verringern ist, ferner von dem Wert für die Aktivität des Reformierungskatalysators abhängt.

6. Verfahren nach einem der vorhergehenden Ansprüche, wobei die ein oder mehreren zusammensetzungs-unabhängigen Eigenschaften von den ein oder mehreren Verfahrensströmen eine Durchflussmenge von einer kohlenwasserstoffhaltigen Zufuhr zu dem Reformer für die Reformierungsreaktion umfassen und wobei der Schritt des Bestimmens, ob das molare Dampf-zu-Kohlenstoff-Verhältnis zu erhöhen oder zu verringern ist, von dem Wert für die Durchflussmenge von der kohlenwasserstoffhaltigen Zufuhr zu dem Reformer abhängt.

7. Verfahren nach Anspruch 6, wobei die ein oder mehreren zusammensetzungs-unabhängigen Eigenschaften von den ein oder mehreren Verfahrensströmen ferner eine Durchflussmenge von einer weiteren kohlenwasserstoffhaltigen Zufuhr zu dem Reformer umfassen und wobei der Schritt des Bestimmens, ob das molare Dampf-zu-Kohlenstoff-Verhältnis zu erhöhen oder zu verringern ist, von dem Wert für die Durchflussmenge von der anderen kohlenwasserstoffhaltigen Zufuhr zu dem Reformer abhängt, wobei die andere kohlenwasserstoffhaltige Zufuhr ein Rezyklusstrom ist, der Ableitungsmaterial aus dem Reformer umfasst.

8. Verfahren nach einem der vorhergehenden Ansprüche, wobei:
die ein oder mehreren zusammensetzungs-unabhängigen Eigenschaften von den ein oder mehreren Verfahrensströmen eine Temperatur von einer kohlenwasserstoffhaltigen Zufuhr zu dem Reformer für die Reformierungsreaktion umfassen und wobei der Schritt des Bestimmens, ob das molare Dampf-zu-Kohlenstoff-Verhältnis zu erhöhen oder zu verringern ist, von dem Wert für die Temperatur von der kohlenwasserstoffhaltigen Zufuhr zu dem Reformer abhängt; und/oder
die ein oder mehreren zusammensetzungs-unabhängigen Eigenschaften von den ein oder mehreren Verfahrensströmen einen Druck von einer kohlenwasserstoffhaltigen Zufuhr zu dem Reformer für die Reformierungsreaktion umfassen und wobei der Schritt des Bestimmens, ob das molare Dampf-zu-Kohlenstoff-Verhältnis zu erhöhen oder zu verringern ist, von dem Wert für den Druck von der kohlenwasserstoffhaltigen Zufuhr zu dem Reformer abhängt.

9. Verfahren nach einem der vorhergehenden Ansprüche, wobei die ein oder mehreren zusammensetzungs-unabhängigen Eigenschaften von den ein oder mehreren Verfahrensströmen eine Durchflussmenge von einem Brennstoffstrom zu dem Reformer zum Verbrennungserwärmen umfassen und wobei der Schritt des Bestimmens, ob das molare Dampf-zu-Kohlenstoff-Verhältnis zu erhöhen oder zu verringern ist, von dem Wert für die Durchflussmenge von dem Brennstoffstrom zu dem Reformer abhängt.

10. Verfahren nach einem der vorhergehenden Ansprüche, wobei der Schritt des Bestimmens, ob das molare Dampf-zu-Kohlenstoff-Verhältnis zu erhöhen oder zu verringern ist, umfasst:
Messen einer Temperatur, *T*, an einer oder mehreren Längspositionen in einem Reformerrohr von der Vielzahl von Reformerrohren oder Berechnen von einer Temperatur, *T*, an einer oder mehreren Längspositionen in einem Reformerrohr von der Vielzahl von Reformerrohren aus mindestens dem erhaltenen Wert für die ein oder mehreren zusammensetzungs-unabhängigen Eigenschaften;
Berechnen von einer Kohlenstoffbildungstemperatur, *T_{c}*, an den ein oder mehreren Längspositionen in dem Reformerrohr von der Vielzahl von Reformerrohren aus mindestens dem erhaltenen Wert für die ein oder mehreren zusammensetzungs-unabhängigen Eigenschaften;
Berechnen von einer Temperaturdifferenz, *ΔT,* wobei *ΔT* = *T_{c} - T* an den ein oder mehreren Längspositionen in dem Reformerrohr; und
Vergleichen als das Kohlenstoffbildungskriterium von der Temperaturdifferenz, *ΔT,* mit einer Zieltemperaturdifferenz, um zu bestimmen, ob das molare Dampf-zu-Kohlenstoff-Verhältnis zu erhöhen oder zu verringern ist.

11. Verfahren nach einem der Ansprüche 3 bis 9, wobei der Schritt des Bestimmens, ob das molare Dampf-zu-Kohlenstoff-Verhältnis zu erhöhen oder zu verringern ist, umfasst:
Messen einer Temperatur, *T*, an einer oder mehreren Längspositionen in einem Reformerrohr von der Vielzahl von Reformerrohren oder Berechnen von einer Temperatur, *T*, an einer oder mehreren Längspositionen in einem Reformerrohr von der Vielzahl von Reformerrohren aus mindestens dem erhaltenen Wert für die ein oder mehreren zusammensetzungs-unabhängigen Eigenschaften und dem erhaltenen Wert für die ein oder mehreren zusammensetzungs-abhängigen Eigenschaften;
Berechnen von einer Kohlenstoffbildungstemperatur, *T_{c}*, an den ein oder mehreren Längspositionen in dem Reformerrohr von der Vielzahl von Reformerrohren aus mindestens dem erhaltenen Wert für die ein oder mehreren zusammensetzungs-unabhängigen Eigenschaften und dem erhaltenen Wert für die ein oder mehreren zusammensetzungs-abhängigen Eigenschaften;
Berechnen von einer Temperaturdifferenz, *ΔT,* wobei *ΔT = T_{c} - T* an den ein oder mehreren Längspositionen in dem Reformerrohr; und
Vergleichen als das Kohlenstoffbildungskriterium von der Temperaturdifferenz, *ΔT,* mit einer Zieltemperaturdifferenz, um zu bestimmen, ob das molare Dampf-zu-Kohlenstoff-Verhältnis zu erhöhen oder zu verringern ist.

12. Verfahren nach einem der Ansprüche 4 bis 9, wobei der Schritt des Bestimmens, ob das molare Dampf-zu-Kohlenstoff-Verhältnis zu erhöhen oder zu verringern ist, umfasst:
Messen einer Temperatur, *T*, an einer oder mehreren Längspositionen in einem Reformerrohr von der Vielzahl von Reformerrohren oder Berechnen von einer Temperatur, *T*, an einer oder mehreren Längspositionen in einem Reformerrohr von der Vielzahl von Reformerrohren aus mindestens dem erhaltenen Wert für die ein oder mehreren zusammensetzungs-unabhängigen Eigenschaften und der erhaltenen Zusammensetzung von den ein oder mehreren Verfahrensströmen;
Berechnen von einer Kohlenstoffbildungstemperatur, *T_{c}*, an den ein oder mehreren Längspositionen in dem Reformerrohr von der Vielzahl von Reformerrohren aus mindestens dem erhaltenen Wert für die ein oder mehreren zusammensetzungs-unabhängigen Eigenschaften und der erhaltenen Zusammensetzung von den ein oder mehreren Verfahrensströmen;
Berechnen von einer Temperaturdifferenz, *ΔT,* wobei *ΔT* = *T_{c} - T* an den ein oder mehreren Längspositionen in dem Reformerrohr; und
Vergleichen als das Kohlenstoffbildungskriterium von der Temperaturdifferenz, *ΔT,* mit einer Zieltemperaturdifferenz, um zu bestimmen, ob das molare Dampf-zu-Kohlenstoff-Verhältnis zu erhöhen oder zu verringern ist.

13. Verfahren nach einem der Ansprüche 5 bis 9, wobei der Schritt des Bestimmens, ob das molare Dampf-zu-Kohlenstoff-Verhältnis zu erhöhen oder zu verringern ist, umfasst:
Messen einer Temperatur, *T*, an einer oder mehreren Längspositionen in einem Reformerrohr von der Vielzahl von Reformerrohren oder Berechnen von einer Temperatur, *T*, an einer oder mehreren Längspositionen in einem Reformerrohr von der Vielzahl von Reformerrohren aus mindestens dem erhaltenen Wert für die ein oder mehreren zusammensetzungs-unabhängigen Eigenschaften und dem erhaltenen Wert für die Aktivität von dem Reformierungskatalysator;
Berechnen von einer Kohlenstoffbildungstemperatur, *T_{c}*, an den ein oder mehreren Längspositionen in dem Reformerrohr von der Vielzahl von Reformerrohren aus mindestens dem erhaltenen Wert für die ein oder mehreren zusammensetzungs-unabhängigen Eigenschaften und dem erhaltenen Wert für die Aktivität von dem Reformierungskatalysator;
Berechnen von einer Temperaturdifferenz, *ΔT,* wobei *ΔT = T_{c} - T* an den ein oder mehreren Längspositionen in dem Reformerrohr; und
Vergleichen als das Kohlenstoffbildungskriterium von der Temperaturdifferenz, *ΔT,* mit einer Zieltemperaturdifferenz, um zu bestimmen, ob das molare Dampf-zu-Kohlenstoff-Verhältnis zu erhöhen oder zu verringern ist.

14. Verfahren nach einem der Ansprüche 1 bis 9, wobei der Schritt des Bestimmens, ob das molare Dampf-zu-Kohlenstoff-Verhältnis zu erhöhen oder zu verringern ist, das Vergleichen des molaren Dampf-zu-Kohlenstoff-Verhältnisses mit einem molaren Dampf-zu-Kohlenstoff-Referenzverhältnis umfasst, wobei das molare Dampf-zu-Kohlenstoff-Referenzverhältnis aus einem Graph und/oder einer Nachschlagetabelle, erzeugt aus dem Kohlenstoffbildungskriterium, bestimmt wird, wobei das molare Dampf-zu-Kohlenstoff-Referenzverhältnis aus dem Graph und/oder der Nachschlagetabelle dem erhaltenen Wert für jede von den ein oder mehreren zusammensetzungs-unabhängigen Eigenschaften entspricht.

15. Verfahren nach einem der Ansprüche 3 bis 9, wobei der Schritt des Bestimmens, ob das molare Dampf-zu-Kohlenstoff-Verhältnis zu erhöhen oder zu verringern ist, das Vergleichen des molaren Dampf-zu-Kohlenstoff-Verhältnisses mit einem molaren Dampf-zu-Kohlenstoff-Referenzverhältnis umfasst, wobei das molare Dampf-zu-Kohlenstoff-Referenzverhältnis aus einem Graph und/oder einer Nachschlagetabelle, erzeugt aus dem Kohlenstoffbildungskriterium, bestimmt wird, wobei das molare Dampf-zu-Kohlenstoff-Referenzverhältnis aus dem Graph und/oder der Nachschlagetabelle dem erhaltenen Wert für jede von den ein oder mehreren zusammensetzungs-unabhängigen Eigenschaften und dem erhaltenen Wert für die ein oder mehreren zusammensetzungs-abhängigen Eigenschaften entspricht.

16. Verfahren nach einem der Ansprüche 4 bis 9, wobei der Schritt des Bestimmens, ob das molare Dampf-zu-Kohlenstoff-Verhältnis zu erhöhen oder zu verringern ist, das Vergleichen des molaren Dampf-zu-Kohlenstoff-Verhältnisses mit einem molaren Dampf-zu-Kohlenstoff-Referenzverhältnis umfasst, wobei das molare Dampf-zu-Kohlenstoff-Referenzverhältnis aus einem Graph und/oder einer Nachschlagetabelle, erzeugt aus dem Kohlenstoffbildungskriterium, bestimmt wird, wobei das molare Dampf-zu-Kohlenstoff-Referenzverhältnis aus dem Graph und/oder der Nachschlagetabelle dem erhaltenen Wert für jede von den ein oder mehreren zusammensetzungs-unabhängigen Eigenschaften und der erhaltenen Zusammensetzung von den ein oder mehreren Verfahrensströmen entspricht.

17. Verfahren nach einem der Ansprüche 5 bis 9, wobei der Schritt des Bestimmens, ob das molare Dampf-zu-Kohlenstoff-Verhältnis zu erhöhen oder zu verringern ist, das Vergleichen des molaren Dampf-zu-Kohlenstoff-Verhältnisses mit einem molaren Dampf-zu-Kohlenstoff-Referenzverhältnis umfasst, wobei das molare Dampf-zu-Kohlenstoff-Referenzverhältnis aus einem Graph und/oder einer Nachschlagetabelle, erzeugt aus dem Kohlenstoffbildungskriterium, bestimmt wird, wobei das molare Dampf-zu-Kohlenstoff-Referenzverhältnis aus dem Graph und/oder der Nachschlagetabelle dem erhaltenen Wert für jede von den ein oder mehreren zusammensetzungs-unabhängigen Eigenschaften und dem erhaltenen Wert für die Aktivität von dem Reformierungskatalysators entspricht.

## Revendications

1. Procédé de fonctionnement d'un reformeur catalytique vapeur-hydrocarbure, le reformeur ayant une pluralité de tubes de reformeur contenant un catalyseur de reformage destiné à faire réagir la vapeur et un ou plusieurs hydrocarbures en présence du catalyseur de reformage dans une réaction de reformage, dans lequel la vapeur est introduite à un rapport molaire vapeur-carbone, le procédé comprenant :
l'obtention d'une valeur pour chacune des une ou plusieurs propriétés indépendantes de la composition d'un ou plusieurs flux de traitement, les une ou plusieurs propriétés indépendantes de la composition étant choisies parmi des propriétés affectant la formation de carbone sur le catalyseur de reformage ;
la détermination par au moins l'un d'un calcul, d'une table de consultation, d'une base de données et d'un graphe s'il faut augmenter ou diminuer le rapport molaire vapeur-carbone en utilisant au moins la valeur des une ou plusieurs propriétés indépendantes de la composition et dépendant d'un critère de formation de carbone dans lequel le critère de formation de carbone est un critère en termes quantitatifs qui définit la propension des un ou plusieurs hydrocarbures dans les tubes de reformeur à former du carbone sur le catalyseur de reformage dans les tubes de reformeur ; et
l'augmentation ou la diminution du rapport molaire vapeur-carbone en conformité avec l'étape de détermination s'il faut augmenter ou diminuer le rapport molaire vapeur-carbone.

2. Procédé selon la revendication 1, dans lequel les un ou plusieurs flux de traitement sont choisis parmi un flux d'admission vers le reformeur, un flux de refoulement du reformeur, un flux d'admission vers un préreformeur, et un flux de refoulement du préreformeur, dans lequel le flux de refoulement du préreformeur alimente le reformeur, et dans lequel les une ou plusieurs propriétés indépendantes de la composition sont choisies parmi la température, la pression et le débit total.

3. Procédé selon l'une quelconque des revendications précédentes, comprenant en outre :
l'obtention d'une valeur pour chacune des une ou plusieurs propriétés dépendantes de la composition des un ou plusieurs flux de traitement, les une ou plusieurs propriétés dépendantes de la composition étant choisies parmi des propriétés affectant la formation de carbone sur le catalyseur de reformage ;
dans lequel l'étape de détermination s'il faut augmenter ou diminuer le rapport molaire vapeur-carbone dépend en outre de la valeur des une ou plusieurs propriétés dépendantes de la composition.

4. Procédé selon l'une quelconque des revendications précédentes, comprenant en outre :
l'obtention de la composition des un ou plusieurs flux de traitement ;
dans lequel l'étape de détermination s'il faut augmenter ou diminuer le rapport molaire vapeur-carbone dépend en outre de la composition des un ou plusieurs flux de traitement.

5. Procédé selon l'une quelconque des revendications précédentes, comprenant en outre :
l'obtention d'une valeur pour l'activité du catalyseur de reformage ;
dans lequel l'étape de détermination s'il faut augmenter ou diminuer le rapport molaire vapeur-carbone dépend en outre de la valeur de l'activité du catalyseur de reformage.

6. Procédé selon l'une quelconque des revendications précédentes, dans lequel les une ou plusieurs propriétés indépendantes de la composition des un ou plusieurs flux de traitement incluent un débit d'une alimentation contenant des hydrocarbures vers le reformeur pour la réaction de reformage et dans lequel l'étape de détermination s'il faut augmenter ou diminuer le rapport molaire vapeur-carbone dépend de la valeur du débit de l'alimentation contenant des hydrocarbures vers le reformeur.

7. Procédé selon la revendication 6, dans lequel les une ou plusieurs propriétés indépendantes de la composition des un ou plusieurs flux de traitement incluent en outre un débit d'une autre alimentation contenant des hydrocarbures vers le reformeur, et dans lequel l'étape de détermination s'il faut augmenter ou diminuer le rapport molaire vapeur-carbone dépend de la valeur du débit de l'autre alimentation contenant des hydrocarbures vers le reformeur, dans lequel l'autre alimentation contenant des hydrocarbures est un flux de recyclage comprenant un effluent provenant du reformeur.

8. Procédé selon l'une quelconque des revendications précédentes, dans lequel :
les une ou plusieurs propriétés indépendantes de la composition des un ou plusieurs flux de traitement incluent une température d'une alimentation contenant des hydrocarbures vers le reformeur pour la réaction de reformage et dans lequel l'étape de détermination s'il faut augmenter ou diminuer le rapport molaire vapeur-carbone dépend de la valeur de la température de l'alimentation contenant des hydrocarbures vers le reformeur ; et/ou
les une ou plusieurs propriétés indépendantes de la composition des un ou plusieurs flux de traitement incluent une pression d'une alimentation contenant des hydrocarbures vers le reformeur pour la réaction de reformage et dans lequel l'étape de détermination s'il faut augmenter ou diminuer le rapport molaire vapeur-carbone dépend de la valeur de la pression de l'alimentation contenant des hydrocarbures vers le reformeur.

9. Procédé selon l'une quelconque des revendications précédentes, dans lequel les une ou plusieurs propriétés indépendantes de la composition des un ou plusieurs flux de traitement incluent un débit d'un flux de combustible vers le reformeur pour le chauffage de combustion et dans lequel l'étape de détermination s'il faut augmenter ou diminuer le rapport molaire vapeur-carbone dépend de la valeur du débit du flux de combustible vers le reformeur.

10. Procédé selon l'une quelconque des revendications précédentes, dans lequel l'étape de détermination s'il faut augmenter ou diminuer le rapport molaire vapeur-carbone comprend :
la mesure d'une température, *T*, au niveau d'une ou plusieurs positions longitudinales dans un tube de reformeur de la pluralité de tubes de reformeur ou le calcul d'une température, *T*, au niveau d'une ou plusieurs positions longitudinales dans un tube de reformeur de la pluralité de tubes de reformeur à partir au moins de la valeur obtenue des une ou plusieurs propriétés indépendantes de la composition ;
le calcul d'une température de formation de carbone, *T_{c},* au niveau des une ou plusieurs positions longitudinales dans le tube de reformeur de la pluralité de tubes de reformeur à partir au moins de la valeur obtenue des une ou plusieurs propriétés indépendantes de la composition ;
le calcul d'une différence de température, *ΔT,* où *ΔT* = *T_{c} - T* au niveau des une ou plusieurs positions longitudinales dans le tube de reformeur ; et
la comparaison de la différence de température, *ΔT,* à une différence de température cible en tant que critère de formation de carbone pour déterminer s'il faut augmenter ou diminuer le rapport molaire vapeur-carbone.

11. Procédé selon l'une quelconque des revendications 3 à 9, dans lequel l'étape de détermination s'il faut augmenter ou diminuer le rapport molaire vapeur-carbone comprend :
la mesure d'une température, *T*, au niveau d'une ou plusieurs positions longitudinales dans un tube de reformeur de la pluralité de tubes de reformeur ou le calcul d'une température, *T*, au niveau d'une ou plusieurs positions longitudinales dans un tube de reformeur de la pluralité de tubes de reformeur à partir au moins de la valeur obtenue des une ou plusieurs propriétés indépendantes de la composition et de la valeur obtenue des une ou plusieurs propriétés dépendantes de la composition ;
le calcul d'une température de formation de carbone, *T_{c},* au niveau des une ou plusieurs positions longitudinales dans le tube de reformeur de la pluralité de tubes de reformeur à partir au moins de la valeur obtenue des une ou plusieurs propriétés indépendantes de la composition et de la valeur obtenue des une ou plusieurs propriétés dépendantes de la composition ;
le calcul d'une différence de température, *ΔT,* où *ΔT* = *T_{c} - T* au niveau des une ou plusieurs positions longitudinales dans le tube de reformeur ; et
la comparaison de la différence de température, *ΔT,* à une différence de température cible en tant que critère de formation de carbone pour déterminer s'il faut augmenter ou diminuer le rapport molaire vapeur-carbone.

12. Procédé selon l'une quelconque des revendications 4 à 9, dans lequel l'étape de détermination s'il faut augmenter ou diminuer le rapport molaire vapeur-carbone comprend :
la mesure d'une température, *T*, au niveau d'une ou plusieurs positions longitudinales dans un tube de reformeur de la pluralité de tubes de reformeur ou le calcul d'une température, *T*, au niveau d'une ou plusieurs positions longitudinales dans un tube de reformeur de la pluralité de tubes de reformeur à partir au moins de la valeur obtenue des une ou plusieurs propriétés indépendantes de la composition et de la composition obtenue des un ou plusieurs flux de traitement ;
le calcul d'une température de formation de carbone, *T_{c},* au niveau des une ou plusieurs positions longitudinales dans le tube de reformeur de la pluralité de tubes de reformeur à partir au moins de la valeur obtenue des une ou plusieurs propriétés indépendantes de la composition et de la composition obtenue des un ou plusieurs flux de traitement ;
le calcul d'une différence de température, *ΔT,* où *ΔT* = *T_{c}* - *T* au niveau des une ou plusieurs positions longitudinales dans le tube de reformeur ; et
la comparaison de la différence de température, *ΔT,* à une différence de température cible en tant que critère de formation de carbone pour déterminer s'il faut augmenter ou diminuer le rapport molaire vapeur-carbone.

13. Procédé selon l'une quelconque des revendications 5 à 9, dans lequel l'étape de détermination s'il faut augmenter ou diminuer le rapport molaire vapeur-carbone comprend :
la mesure d'une température, *T*, au niveau d'une ou plusieurs positions longitudinales dans un tube de reformeur de la pluralité de tubes de reformeur ou le calcul d'une température, *T*, au niveau d'une ou plusieurs positions longitudinales dans un tube de reformeur de la pluralité de tubes de reformeur à partir au moins de la valeur obtenue des une ou plusieurs propriétés indépendantes de la composition et de la valeur obtenue pour l'activité du catalyseur de reformage ;
le calcul d'une température de formation de carbone, *T_{c},* au niveau des une ou plusieurs positions longitudinales dans le tube de reformeur de la pluralité de tubes de reformeur à partir au moins de la valeur obtenue des une ou plusieurs propriétés indépendantes de la composition et de la valeur obtenue pour l'activité du catalyseur de reformage ;
le calcul d'une différence de température, *ΔT,* où *ΔT* = *T_{c} - T* au niveau des une ou plusieurs positions longitudinales dans le tube de reformeur ; et
la comparaison de la différence de température, *ΔT,* à une différence de température cible en tant que critère de formation de carbone pour déterminer s'il faut augmenter ou diminuer le rapport molaire vapeur-carbone.

14. Procédé selon l'une quelconque des revendications 1 à 9, dans lequel l'étape de détermination s'il faut augmenter ou diminuer le rapport molaire vapeur-carbone comprend la comparaison du rapport molaire vapeur-carbone à un rapport molaire vapeur-carbone de référence, le rapport molaire vapeur-carbone de référence étant déterminé à partir d'un graphe et/ou d'une table de consultation créés à partir du critère de formation de carbone, le rapport molaire vapeur-carbone de référence à partir du graphe et/ou de la table de consultation correspondant à la valeur obtenue pour chacune des une ou plusieurs propriétés indépendantes de la composition.

15. Procédé selon l'une quelconque des revendications 3 à 9, dans lequel l'étape de détermination s'il faut augmenter ou diminuer le rapport molaire vapeur-carbone comprend la comparaison du rapport molaire vapeur-carbone à un rapport molaire vapeur-carbone de référence, le rapport molaire vapeur-carbone de référence étant déterminé à partir d'un graphe et/ou d'une table de consultation créés à partir du critère de formation de carbone, le rapport molaire vapeur-carbone de référence à partir du graphe et/ou de la table de consultation correspondant à la valeur obtenue pour chacune des une ou plusieurs propriétés indépendantes de la composition et à la valeur obtenue des une ou plusieurs propriétés dépendantes de la composition.

16. Procédé selon l'une quelconque des revendications 4 à 9, dans lequel l'étape de détermination s'il faut augmenter ou diminuer le rapport molaire vapeur-carbone comprend la comparaison du rapport molaire vapeur-carbone à un rapport molaire vapeur-carbone de référence, le rapport molaire vapeur-carbone de référence étant déterminé à partir d'un graphe et/ou d'une table de consultation créés à partir du critère de formation de carbone, le rapport molaire vapeur-carbone de référence à partir du graphe et/ou de la table de consultation correspondant à la valeur obtenue pour chacune des une ou plusieurs propriétés indépendantes de la composition et à la composition obtenue des un ou plusieurs flux de traitement.

17. Procédé selon l'une quelconque des revendications 5 à 9, dans lequel l'étape de détermination s'il faut augmenter ou diminuer le rapport molaire vapeur-carbone comprend la comparaison du rapport molaire vapeur-carbone à un rapport molaire vapeur-carbone de référence, le rapport molaire vapeur-carbone de référence étant déterminé à partir d'un graphe et/ou d'une table de consultation créés à partir du critère de formation de carbone, le rapport molaire vapeur-carbone de référence à partir du graphe et/ou de la table de consultation correspondant à la valeur obtenue pour chacune des une ou plusieurs propriétés indépendantes de la composition et à la valeur obtenue pour l'activité du catalyseur de reformage.
